# EUROPEAN PATENT APPLICATION

(11) **EP 1 104 151 A2**
(43) Date of publication of application: **30.05.2001**
(21) Application number: 00310340.5
(22) Date of filing: 21.11.2000
(51) Int. Cl.: H04M 1/725, H04M 1/247

(54) **Mobile station having improved user interface providing application management and other functions**

(30) Priority: 24.11.1999 US 444917
(71) Applicant: NOKIA MOBILE PHONES LTD., 02150 Espoo (FI)
(72) Inventor: Pirskanen, Hannu, 90540 Oulu (FI); Valtonen, Timo, 02570 Siuntio (FI); Kraft, Christian, 1790 Copenhagen V (DK); Silfverberg, Miika, 00200 Helsinki (FI); Helle, Seppo, 21530 Paimio (FI); Wikberg, Harri, 00200 Helsinki (FI); Tokkonen, Timo, 90800 Oulu (FI); Kiljander, Harri, 00200 Espoo (FI)
(74) Representative: Read, Matthew Charles

(57) **Abstract**

A method is disclosed for operating a mobile station (10), comprising steps of (a) providing the mobile station to have a user interface (11) comprised of a display (20) and at least one user input device (22, 23); (b) displaying to the user an identification of a plurality of Applications that the mobile station is capable of executing, the identifications being simultaneously displayed in a grid or list format; (c) manipulating the input device to select one of the displayed Application indications; and, in response to further input from the user, (d) displaying a list of Options that are available for the selected Application. This invention provides a novel user interface for a mobile station, wherein a user is given control over the Applications of the mobile station in a readily comprehended visual manner, and wherein data of various types is treated simply as an object that can be freely moved between and/or shared by Applications, with data format conversions being made as required (e.g., character string to numeric string).

## Description

### FIELD OF THE INVENTION:

This invention relates generally to mobile stations, such as cellular radio telephones and personal communicators, and more particularly relates to user interfaces for mobile stations.

### BACKGROUND OF THE INVENTION:

Modern radio telephones, referred to herein generally as mobile stations, typically have a display, a keypad and associated software drivers for providing a user interface. With the aid of the user interface a user of the mobile station is enabled to place telephone calls and program various features of the mobile station. For those mobile stations that operate with a digital wireless network the user may also have the ability to receive text messages, compose and transmit text messages, receive and transmit e-mail, forward calls, access voice mail, as well as take advantage of a number of other valuable communication features.

It can thus be appreciated that the user interface is a key component of the mobile station, and that the flexibility, ease of use, and functionality of the user interface are important features that relate to the overall operation of the mobile station. In that the quality of the user interface is directly perceived and experienced by the user of the mobile station, the user interface is an important feature of the overall mobile station design and implementation.

### OBJECTS AND ADVANTAGES OF THE INVENTION:

It is a first object and advantage of this invention to provide an improved user interface for a mobile station.

It is a further object and advantage of this invention to provide an improved user interface for a mobile station that enables one hand operation of a manipulator to gain access to and interact with all applications.

It is a further object and advantage of this invention to provide a multimedia user interface for a mobile station that enables input data from different sources, such as text input, recorded voice input, and image input, to be combined together into a unified whole for presentation to an operator.

It is a further object and advantage of this invention to display user-selectable options using a "pop-up" menu technique wherein available options may be partitioned into different logical groups of options.

It is a further object and advantage of this invention to provide a user of a mobile station with an ability to "bookmark" certain objects, such as selectable strings and application icons, and to enable the bookmarked objects to form a separate view of user-preferred objects.

It is another object and advantage of this invention to provide a mobile station object handling method wherein there is displayed a menu of functions operable in the context of a currently displayed object, and enabling the user to activate a selected function, such as by editing, erasing, copying, moving, and making a query.

### SUMMARY OF THE INVENTION

The foregoing objects and advantages are realized by methods and apparatus in accordance with embodiments of this invention.

A method is disclosed for operating a mobile station, comprising steps of (a) providing the mobile station to have a user interface comprised of a display and at least one user input device; (b) displaying to the user an identification of a plurality of Applications that the mobile station is capable of executing, the identifications being simultaneously displayed in a grid or list format; (c) manipulating the input device to select one of the displayed Application indications; and, in response to further input from the user, (d) displaying a list of Options that are available for the selected Application. The step of displaying the available Applications can include a step of grouping the displayed identifications into user-specified Application groups.

The Options are preferably displayed in a pop-up menu format that is displayed over the currently displayed Application screen. At least some of the displayed Options are logically grouped together in Option categories, the categories being comprised of context specific Options, state specific Options, Application specific options, and general Options.

The mobile station stores data related to a first Application, and the method further includes steps of (e) manipulating the input device to designate all or a portion of the stored data; and (f) further manipulating the input device to associate the designated data with at least one other, different Application, or with a different location in the same Application. The stored data could be image data, recorded voice data, textual data, or any data that can be suitably stored within a memory that is locally or remotely accessible by the mobile station. In one embodiment the stored data is comprised of a message that was received from a wireless network, such as a Short Message Service (SMS) or E-mail message, wherein the designated data is comprised of a character string that represents a telephone number, and wherein the at least one other different Application is an Application that uses a numeric telephone number. By example, the different Application could be an Application that originates a call to the telephone number, or it may be a speed dial or a call barring Application. In another embodiment the user is enabled to Bookmark certain data and store an identifier for the Bookmarked data in a separate Application. Subsequently selecting the separate Application, and then selecting one of the identifiers, results in the associated data being recalled from memory and displayed to the user.

In general, this invention provides a novel user interface for a mobile station, wherein a user is given control over the Applications of the mobile station in a readily comprehended visual manner, and wherein data of various types is treated simply as an object that can be freely moved between and/or shared by Applications, with data format conversions being made as required (e.g., character string to numeric string).

### BRIEF DESCRIPTION OF THE DRAWINGS

The above set forth and other features of the invention are made more apparent in the ensuing Detailed Description of the Invention when read in conjunction with the attached Drawings, wherein:
Fig. 1 is a block diagram of a mobile station that is constructed and operated in accordance with this invention;
Fig. 2 is an elevational view of the mobile station shown in Fig. 1, and which further illustrates a cellular communication system to which the mobile station is bidirectionally coupled through wireless RF links;
Fig. 3A illustrates a display screen format for Applications arranged in a grid format;
Fig. 3B illustrates a display screen format for Applications arranged in a list format;
Figs. 3C and 3D are examples of displayed check boxes and radio buttons, respectively;
Fig. 3E is an example of a displayed slider;
Fig. 4 depicts several display screens and shows a logical progression of screens in response to input from a user, the Figure being particularly useful in explaining the Application management of the mobile station of Figs. 1 and 2;
Fig. 5 depicts several display screens and shows examples of selection lists;
Fig. 6 depicts two display screens and shows an example of a multi-selection list;
Fig. 7 depicts several display screens and shows examples of selection grids;
Fig. 8 depicts several display screens and shows examples of zooming and scrolling data;
Fig. 9 depicts two display screens and shows an example of context sensitive Options;
Fig. 10 depicts several display screens and shows a logical progression of screens in response to input from a user, the Figure being particularly useful in explaining the editing of data in a field;
Fig. 11 is an example of a pop-up menu;
Fig. 12 depicts two display screens and shows a logical progression of screens in response to input from a user, the Figure being particularly useful in explaining the addition of a Bookmark to a Favorites list;
Fig. 13 depicts two display screens and shows a logical progression of screens in response to input from a user, the Figure being particularly useful in explaining the recalling of a Bookmark from the Favorites list;
Fig. 14 is a further example of a pop-up menu;
Fig. 15 is a high level diagram of an Intelligent Service Architecture within which this invention resides;
Fig. 16 is a high level diagram of a mobile station hardware/software architecture in accordance with an aspect of this invention;
Fig. 17 depicts a relationship between a Personal Number Directory (PND) server and various database entries;
Fig. 18 depicts a relationship between an Imaging server and various database entries; and
Fig. 19 depicts a relationship between a Voice Recorder server and various database entries.

### DETAILED DESCRIPTION OF THE INVENTION

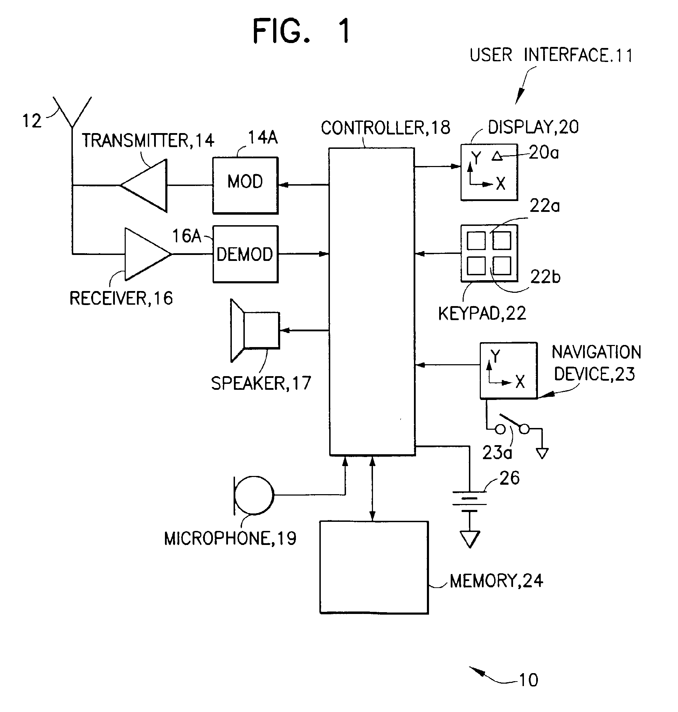

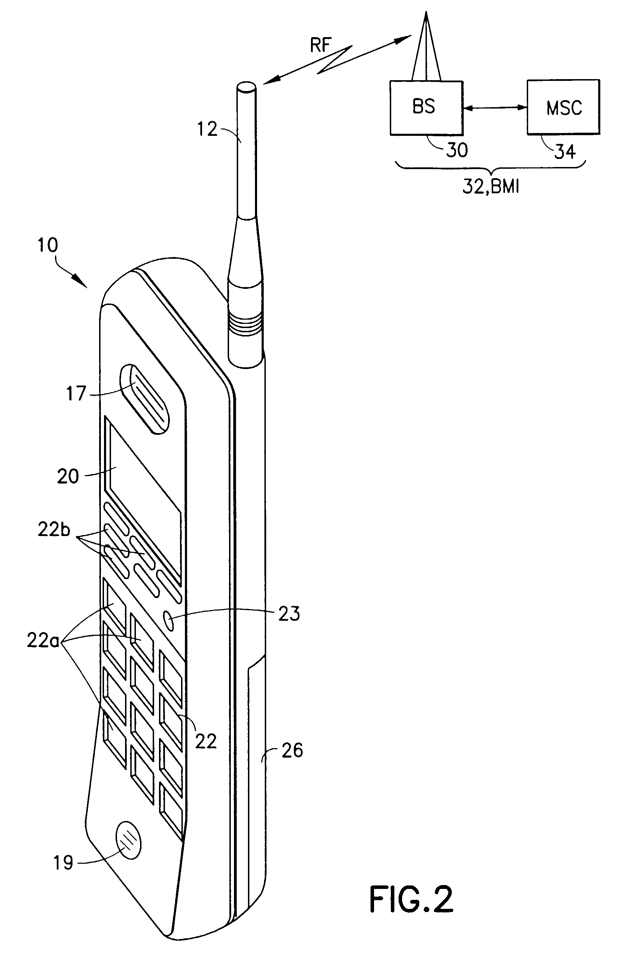

Reference is made to Figs. 1 and 2 for illustrating a wireless user terminal or mobile station 10, such as but not limited to a cellular radiotelephone or a personal communicator, that is suitable for practicing this invention. The mobile station 10 includes an antenna 12 for transmitting signals to and for receiving signals from a base site or base station 30. The base station 30 is a part of a cellular network comprising a Base Station/Mobile Switching Center/Interworking function (BMI) 32 that includes a mobile switching center (MSC) 34. The MSC 34 provides a connection to landline trunks when the mobile station 10 is involved in a call.

The mobile station includes a modulator (MOD) 14A, a transmitter 14, a receiver 16, a demodulator (DEMOD) 16A, and a controller 18 that provides signals to and receives signals from the transmitter 14 and receiver 16, respectively. These signals include signalling information in accordance with the air interface standard of the applicable cellular system, and also user speech and/or user generated data. The air interface standard may have any form, such as one based on time division multiple access (TDMA) or code division multiple access (CDMA), as the teachings of this invention are not constrained for use with any one particular air interface.

It should thus be understood that the mobile station 10 can be a vehicle mounted or a handheld device, and that the mobile station 10 can be capable of operating with one or more air interface standards, modulation types, and access types.

It is understood that the controller 18 also includes the circuitry required for implementing the audio and logic functions of the mobile station. By example, the controller 18 may be comprised of a digital signal processor device, a microprocessor device, and various analog to digital converters, digital to analog converters, and other support circuits. The control and signal processing functions of the mobile station are allocated between these devices according to their respective capabilities.

A user interface 11 includes a conventional earphone or speaker 17, a conventional microphone 19, a point addressable display 20 (preferably enabling the display of icons and images, as well as text), and a user input device, typically a keypad 22, all of which are coupled to the controller 18. The keypad 22 includes the conventional numeric (0-9) and related keys (#,*) 22a, and other keys 22b used for operating the mobile station 10. These other keys 22b may include, by example, a SEND key, various menu scrolling and soft keys, and a PWR key.

The user interface 11 further comprises, in a preferred embodiment of this invention, an integrated pointing or display navigation device 23. The navigation device 23 is capable of at least two degrees of motion, such as motion within an x-y coordinate system related to a display screen 20 x-y coordinate system. The controller 18 receives inputs from the navigation device 23 and converts same into cursor 20a positions on the display screen 20, and/or to selectively highlight a specified line or region. By example, the navigation device 23 may function in a manner similar to a joystick, rollerball, or a mouse. The navigation device 23 further includes at least one switch 23a whereby, for example, depressing the manually operated portion causes a switch closure that is detectable by the controller 18 as a user acknowledgement or "OK". For example, by employing the navigation device 23 the user is enabled to designate a desired x-y location on the display screen 20, and then cause a closure of the switch 23a which is interpreted by the controller 18 as a command to take some type of action related to the designated screen location. The use of the navigation device 23 is further detailed below in the description of presently preferred embodiments of user interface methods.

The navigation device 23 could be implemented using four scroll-keys with a separate OK-key located in the middle of the four keys, or by using a 4-directional joystick with select (OK) functionality when depressed. In another embodiment the navigation device 23 is implemented with two right/left keys placed adjacent to a single axis (up-down) roller portion. It should thus be appreciated that the navigation device 23 could be implemented in a variety of different suitable embodiments.

It is noted that in a preferred embodiment the navigation device 23 is capable of being operated by the user with only one hand, thereby simplifying the user's interaction with the novel multimedia user interface 11 of this invention.

The mobile station 10 also includes a battery 26 for powering the various circuits that are required to operate the mobile station.

The mobile station 10 also includes various memories, shown collectively as the memory 24, wherein are stored a plurality of constants and variables that are used by the controller 18 during the operation of the mobile station. For example, the memory 24 stores the values of various cellular system parameters and the number assignment module (NAM). An operating program for controlling the operation of controller 18 is also stored in the memory 24 (typically in a ROM device). The memory 24 may also store data, including user messages, that are received from the BMI 32 prior to the display of the messages to the user. Various display screen presentations, text, and images are also stored in the memory 24, as will be discussed below.

The operating program in the memory 24 includes routines to present messages and message-related functions to the user on the display 20, typically as various menu items. The memory 24 also includes routines for implementing the methods described below.

By way of introduction, the user interface 11 in accordance with the teaching of this invention allows features and keys to be added and removed easily without having to change the basic architecture or design of the mobile station 10. Preferably, the user interface 11 is such that the user can operate the mobile station 10 using one hand, including accessories.

The user interface 11 generally supports two methods of operation: a fast method for advanced users (using shortcuts, etc.) and an step-by-step simplified method for new users.

When the user presses a key in the idle mode, the display 20 responds in a way that informs the user of the key's primary function, which could be a shortcut.

During the operation of the user interface 11 the phone function is always available. A primary application is one referred to as Phonebook, and the basic state of the phone is Phone Idle.

The user interface 11 embodies an application centricity approach, wherein multitasking possibilities exist, and wherein a dedicated Application-key ensures all applications are available at all times, and furthermore enables the user to easily swap between different functions/applications. Each application has a clearly recognizable application idle state. A separate clear-key is preferably placed together with the numeric keys.

The user interface 11 also embodies an intuitive navigation and selection approach, wherein the manually operated navigation device 23 is employed as primary control device. The press capability of the navigation device 23 is used to Select/Zoom consistently through the user interface 11.

Further in accordance with this invention, all available functions/commands in any state can be found in an options list (accessed via a Left-softkey designated as Options). The options list displays as a pull-down menu, which visually has a close relation to the displayed functions/commands.

The keypad 22 preferably contains at least the following keys: two softkeys (Left and Right), the navigation device 23 (e.g., roller + ScrollLeft + ScrollRight with press capability=OK), the Application-key, the Send-key, the End-key, the Clear-key, and an ITU-T compatible alpha/numeric keypad.

The Left soft-key is generally used for options; both general options (options applying to a certain situation, e.g. application options and settings) and to context-sensitive options, such as those options that apply to a currently selected item (e.g. delete a highlighted message).

The Right soft-key is generally used for cancel, backstep, or quit operations. In the application Idle state the Right soft key is generally used for backstepping.

In Edit situations, scrolling the navigation device 23 up/down is used for moving the cursor 20a up and down one line. The Right/Left soft-keys are used in Edit situations to move the cursor 23a right and left.

In situations where data are being viewed in a Details mode, e.g. memory entries, the Right/Left soft-keys are used to move the view to respectively the next and the previous item. In a Calendar View situation, the Right/Left soft-keys are similarly used to move to the next/previous day, week, month or day; depending on what is currently being viewed. By pressing the navigation device 23 the user selects the highlighted item.

In situations where a highlighted entry is a specific text string or a number, pressing the navigation device 23 causes the controller 18 to enter a combined Edit/View mode where the user can see the text/number in its entirety and then edit the text/number, or it may cause context-sensitive options to be presented to the user.

Pressing the Application-key displays an Application Selection List, allowing the user to switch to another application. This can also be done during a call. Double pressing the Application key provides a short cut to the Idle state. A long press of the Application key gives n (e.g., 3) of the last used applications.

The Send-key is used to create a call, i.e. if the current display contains a phone number, pressing the Send-key initiates a call to the number. In the Phone Idle state the Send-key is used instead to display the Call Registers (the last-dial list as a default list) . In any other application the Send-key is used to access the Phone Idle state.

The following table defines the functionality of Send-key in different states of the mobile station 10:

| Number of active calls: | | | |
|---|---|---|---|
| Phone's state: | 0 | 1 | 2 |
| Phone Idle | redial | hold/unhold | swap |
| PhoneBook | create call | create 2nd call | n/a |
| Any other application | exit | hold/unhold | swap |

The End-key is used to terminate an active call. Pressing the End-key while not in an active call causes the controller 18 to return to the Phone Idle state. The following table defines the functionality of End-key in different states of the phone:

| Number of active calls: | | | |
|---|---|---|---|
| Phone's state: | 0 | 1 | 2 |
| Phone Idle | | end call | drop active call |
| PhoneBook | exit | end call | drop active call |
| Any other application | exit | end call | drop active call |

Pressing the numeric keys in the Phone Idle state causes a Dial Window to be displayed, allowing the user to manually dial a phone number. The Dial Window is a special application, that is placed on top of (displayed over) a currently active application. From the Dial Window the user can directly start the call, using the Send key, and can perform other operation with the number (save, send SMS etc.). The Clear-key is solely used for clearing digits while editing in the Dial Window. Long-pressing the Clear-key clears all digits/characters being edited.

The Selection List contains the currently selectable options, allowing the user to scroll through the options. A currently selected option is indicated to the user by displaying the option using, preferably, inverse video. The display layout of the Selection List depends on the type of options in the list. The selectable option may be a textual option of one or more rows with optional an icon included, such as a picture. There are generally two or more selectable options in the Selection List window at the same time.

A Multi-selection List displays the currently selectable options, allowing the user to scroll and select several options (or none) to be active. Otherwise the Multi-selection List functions in a manner similar to the Selection List.

Having scrolled to the desired option the user presses a Mark-softkey to mark the option as a selected one. If the option is already selected the user unmarks the option by pressing an Unmark-softkey. Thus the Right softkey is the Mark in the case of unselected options and is the Unmark in the case of selected options.

The user exits from the Multi-selection list by pressing a Done softkey. If the user has made changes to the previous selections the user is requested to confirm the changes.

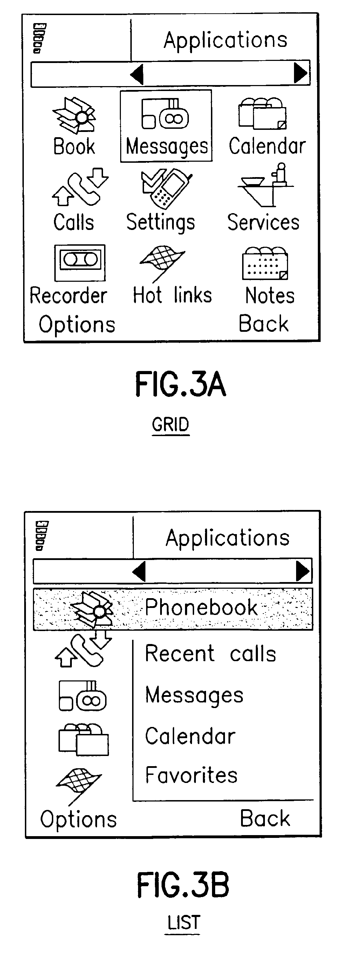

A Selection grid displays the currently selectable items as a grid of cells (see the Applications shown in Fig. 3A), allowing the user to scroll and select an item. Alternately, the Applications can be shown as a list, as in Fig. 3B. In either case a currently selected cell or list entry is indicated to the user using a surrounding border, and any other suitable technique. In the case of Fig. 3A the navigation device 23 is used to scroll the cells of the grid by rotating the navigation device 23 and/or pressing the Left/Right-keys. Having scrolled to the desired cell the user makes the selection by selecting an applicable option from the Options List or by pressing the navigation device 23, thereby closing the switch 23a. In a similar manner, and while within a displayed Form, the user can skip from one field to another by manipulating the navigation device 23. When editing the Form (i.e., in the Edit mode) pressing the navigation device 23 causes the controller 18 to skip to the next field.

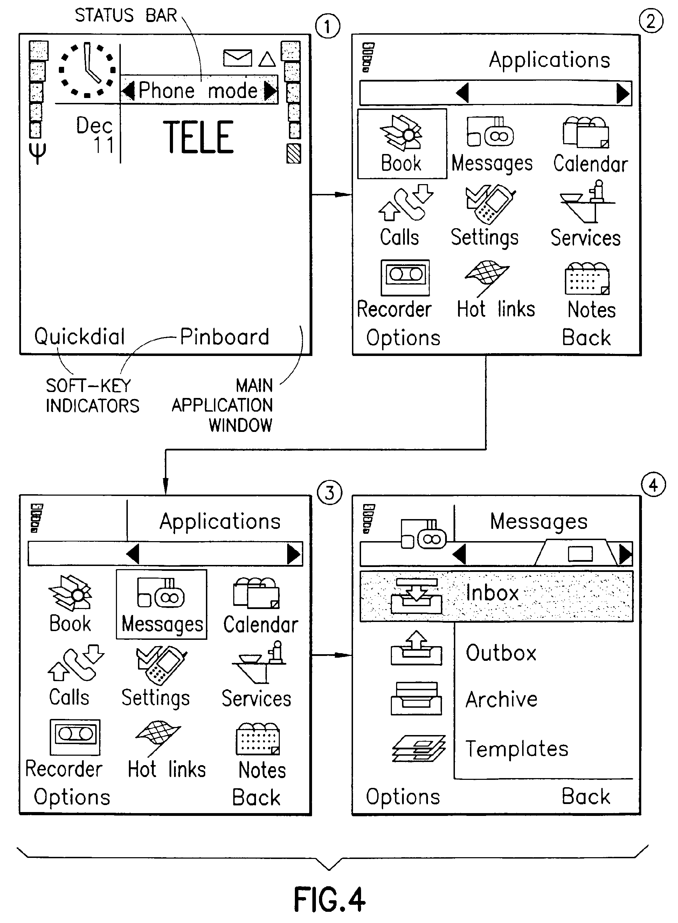

The layout of the display 20 is divided into the following main areas: status bar, main application window, softkeys (see, for example, Fig. 4).

One function of the user interface 11 is to offer to the user that data which is most applicable to the user's current task. The data is treated as an object, and is zoomable and browsable in different levels of details. In order to provide a time efficient data search and browse capability, the number of levels of detail are maintained at three, although this number is not a limitation on the practice of this invention.

In general, the user is enabled to employ the Selection list at the first level, then display more detailed information at the second level, and then the displayed data at the second level can be scrolled using the Left/Right-keys in the same order as it exists in the Selection list at the first level (Left=previous, Right=next). An indication of the scrolling functionality is made in a title bar of the display 20, as well as an indication of the selected editing capability of a field at the third level. A zoom-in on certain data is accomplished by pressing the navigation device 23, thereby closing the switch 23a. A zoom-out is accomplished by pressing the Right soft-key (Back). By employing these procedures the user is enabled to manipulate data as an object by locating or finding the data, and then manipulating the located data in a desired manner.

Context sensitive options are offered to the user using the Left-softkey (Options). Because the Left-softkey is always available the content of the pop-up menu adapts to the current context, i.e. one group in the pop-up menu contains the options which affect the currently selected data object.

Pressing the navigation device 23 in the elementary level Form (no further zoom-in is possible) directly allows the user to obtain options for the selected Field (only the selected field).

For example, in some cases it is possible to move a data object within an application. Moving is done by selecting a Move option from the Options pop-up menu. Once the Move option is selected the visual indication of the data object changes to indicate that it has become a temporary data object. The user then manipulates the navigation device 23 to move the temporary data object to another location, and then depresses the navigation device 23 to insert the temporary data object, after which the temporary data object loses its temporary status. By example, a certain Calendar event (e.g., "trip to home office") can be moved from one day to another day using this technique. Data objects can also be copied in a similar manner.

A Form is used to request any data from the user. A Form contains one or more Form elements and related soft-keys. Exemplary Form elements are: text field, pop-up field, check box, radio button, slider, title, separator, indicator, date, time. These Form elements are now described in further detail.

The Text field is used to request alphanumeric (text or numeric) data from the user. The title may be included on the Text field as an option. The Text field has an editing space which is the maximum available space that can be used for one item of text. The size of the editing space varies in different applications. The Editing window is that portion the Editing space that is shown on the display 20, and any inserted characters appear in the Editing window. The Editing window may encompass the entire display screen area, or a portion of the total area. It may also be equal to the Editing space, i.e. the entire Editing space is shown the display, or just a portion of the Editing space, i.e., a view into the Editing space. The Editing window may contain one or several lines, or it can be expanded during use, depending on the application. A line need not be a whole line, which lies across the entire width of the display 20. The text, lines, and characters can exist in any part of the display. Also the number of possible characters on the display may vary due to variations between character widths and font sizes. In graphic displays the length of a line is determined by the physical length (number of pixels) of the line.

The Pop-up field is used when the user is offered the possibility to fetch a predefined value(s) to the field. The title may be included in the Text field as an option. There are two general types of Pop-up Fields. A first type is for Predefined data only, wherein the user must select one of the values in the Predefined selection list. A second type is for Predefined data and User entry, wherein the user may select one of the predefined data values or enter the data using the keypad 20. The user accesses the selection list of predefined values by selecting a Fetch data option from the Options list (Left soft-key) or by pressing the navigation device 23 while editing the field.

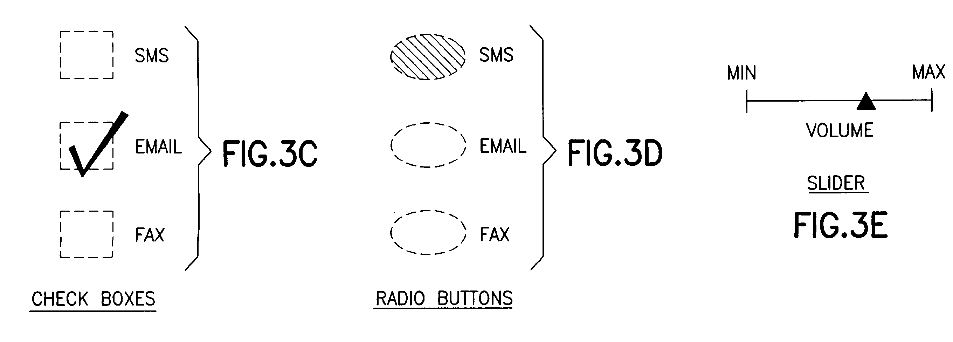

The Check Box (see Fig. 3C) is used to set an option On/Off. Typically two or more closely related Check Boxes are used together to create a set of settings. A Check Box may be displayed as a small dotted box followed by a title, and On/Off selection is indicated as follows: an empty dotted box is equal to Off (not selected); and a dotted box with check mark or an X is equal to On (selected). The user may set the Option On/Off by selecting the option from the Options list (Left softkey) or by pressing the navigation device 23 while in the edit mode.

The Radio Button (see Fig. 3D) is used to select one option from several options (e.g. On/Off). Typically two or more closely related Radio Buttons are used together to create a set of settings. The Radio Button may be displayed as a small empty/filled oval, to readily distinguish it from a Check Box, followed by a title, such as SMS, E-mail, fax. The On/Off selection of a Radio Button is indicated as follows: an empty oval box is equal to not selected; and a filled oval is equal to selected.

The Slider (Fig. 3E) is used to select a value from a predefined set of values, such as a volume setting. The values are preferably scaled and presented as a vector.

The Title Form element is used to display plain text, while the Separator (such as a dashed line) is used to separate the Fields from each others. The Indicator is used to indicate a state of an application, such as the Phone Idle state, and may be text or an icon. The Date field is used to display dates. The user may set the format of the date using a setting (e.g. dd-mm-yy, dd.mm.yy, mm.dd.yy,...). If the user is allowed to adjust the date field the navigation device 23 and Left/Right keys may be used to change the values. The Time field is used to display time. The user may set the format of time using a setting (e.g. 12:00 or 12:00AM). If the user is allowed to adjust the time field the navigation device 23 and Left/Right keys may be used to change the values.

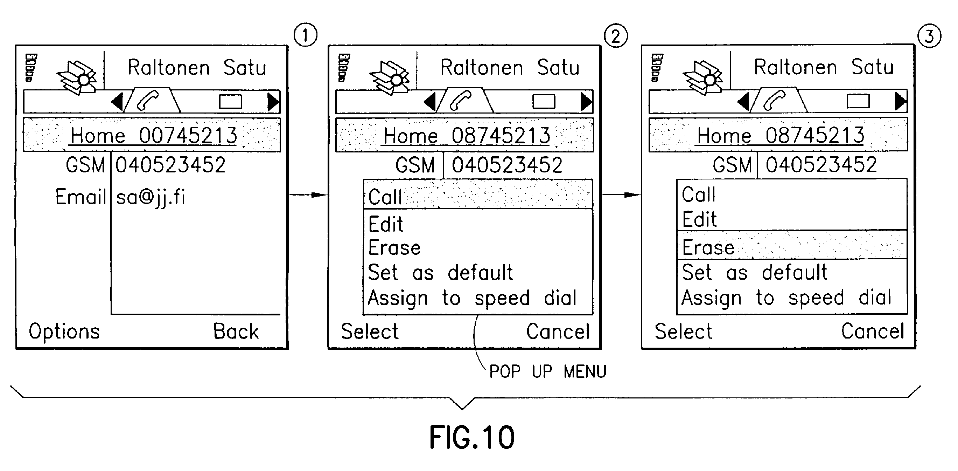

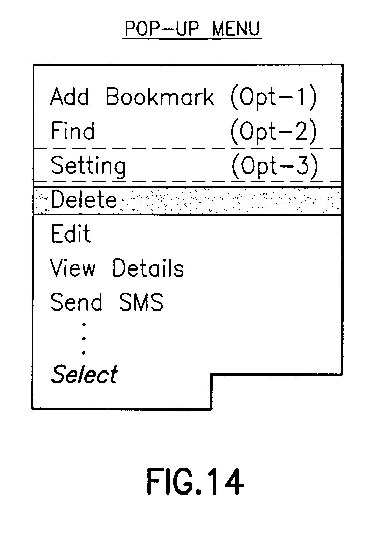

The pop-up menu (see, for example, Figs. 10 and 14) is employed to offer the user those options (actions) that are available in a current state of the selected application. These options may be of different types; e.g., some are related to the highlighted item/menu (i.e. the selected object), some are general in this situation, and some may always be present. The pop-up menu displays over the current application data, and the underlying application data may be darkened (using e.g. grayscales) to enhance the viewing of the pop-up menu. In a preferred embodiment the pop-up menu appears to glide smoothly upwards from the bottom line of the display 20, is a framed window, does not overrule the entire application window (the context of the application is displayed as much as possible), and may be divided to the logical groups of options. The groups are separated using separator line(s). The available options typically include Add Bookmark, Paste, and Copy to Clipboard at the beginning of the option list, followed by any default options. A default option may be highlighted using inverse video. The applicable soft-keys are Select on the left soft-key and Close or Cancel on the right soft-key. The last shown options can be general options.

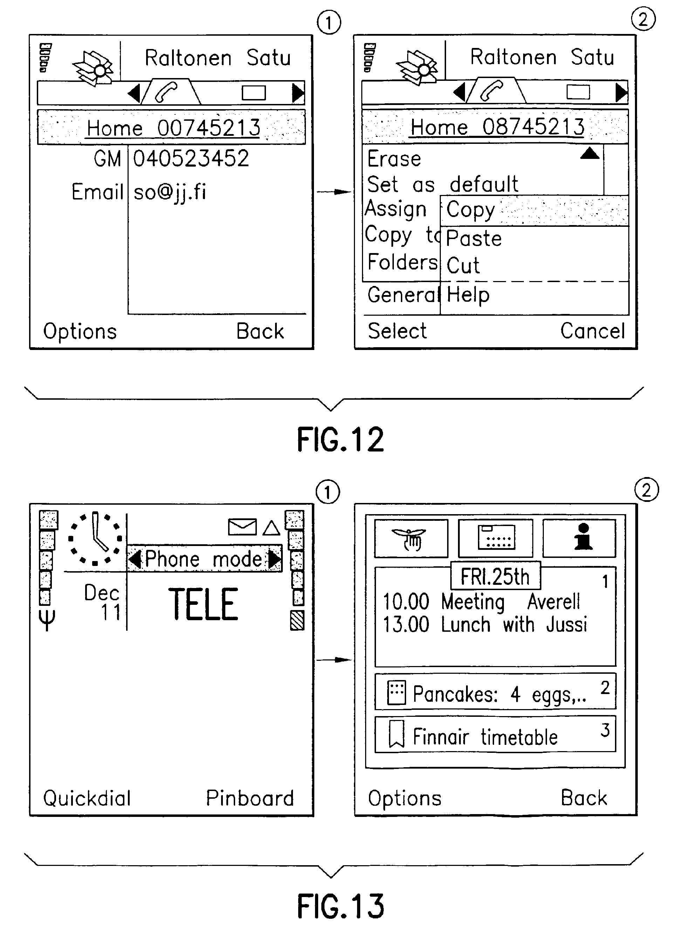

Referring to Figs. 11 and 14 two examples of pop-up menus are shown. The example shown in Fig. 14 illustrates the use of separator lines for grouping Options into context specific Options, state specific Options, Application specific Options, and general options, in that order. The Setting option may always be present. The next options (Delete, Edit, etc.) are context sensitive options and are listed in order of importance. The first context sensitive option is highlighted as the default option when the Options soft-key is pressed.

It is important that the user always be aware of the current operational state of the mobile station 10. Various Notes and Notifications are used for this purpose. A Note is a message which is possibly displayed on the display 20 and which informs the user about something, e.g. a successful or a failed operation, a memory full condition. A Note is comprised of one or more of the following: a text, a tone, a graphic image, or an animation. The following table depicts various Note types (Error, Warning, Information, Confirmation, Wait, Permanent, and Non-Phone Error).

| Type | Duration | Tone | Rules for Use |
|---|---|---|---|
| Error Note | long | Error | Errors during |
| | | | operations |
| | | | attempted by |
| | | | the user |
| | | | (e.g. MEMORY FULL) |
| Warning Note | long | Warning | Warnings that |
| | | | are not |
| | | | directly related to user actions |
| Information Note | long | Confirmation | General Notes |
| | | | not immediately related |
| | | | to user actions (e.g., 3 NETWORKS FOUND) |
| Confirmation | short | | Confirms user |
| | | | actions |
| | | | (e.g. SAVED) |
| Wait Note | in-definite | | User cannot |
| | | | dismiss permanent notes. |
| | | | They stay on |
| | | | display until |
| | | | dismissed by |
| | | | the phone. |
| | | | (e.g. DISCHARGING) |
| Non-Phone Error Note | long | | Notes that |
| | | | are used in-stead of |
| | | | Error Notes |
| | | | when it must |
| | | | be made clear |
| | | | that error is |
| | | | not in the |
| | | | phone (e.g. CALL TERMINATED) |

Notifications are reminders which inform the user of events that have typically occurred in the user's absence. The user is expected to notice the reminder and is requested to respond to the Notification's message. Notifications appear on the display 20 after a short timeout after the last user action. If any key except the soft-key is pressed while the Notifications are displayed the notifications are hidden. The Notifications reappear on the display 20 after a short timeout after the last user action.

Although a Notification is typically just a combination of text and softkeys, it may in addition contain any of the following: a graphic image, an animation, and a tone.

A description will now be made of several important Applications that are made accessible to the user via the user interface 11, in accordance with the teachings of this invention.

### Phone Idle

The Phone Idle Application is the default state in which the mobile station 10 resides while starting up. Referring to Fig. 4, the upper left display screen representation, the Phone Idle screen shows at least the network operator identification, the battery (B) and received signal level (RSL), and all indicators. It also offers access to all outstanding messages, voice messages, missed calls, appointments, and to-dos.

The Phone Idle application offers the user a well-known starting point for all operations, as well as providing a home base where the user can specify short-cuts to preferred applications (e.g., Calendar, Notes, etc.)

In the Phone Idle state the Left soft-key can be used for quick dial application access, while the Right soft-key can be Shortcuts, which launches the Shortcuts (Pinboard) application.

### Application Swapping

Due to the application centricity of user interface 11 the ability to rapidly and easily swap from one application to another is important. To this end all applications have an Application Idle state that contains application specific data or a logo of the application (this allows downloaded applications to contain a commercial logo of the provider, e.g. a network operator logo or similar).

The Left soft-key in any Application Idle is for selecting Options which contains specific options for the application. The Right soft-key is generally used for backstepping, cancelling and quiting operations. The Application Selection Window is shown when the user presses the Application key. This window allows the user to select/switch to another application. The application window (when viewed as a grid as in Fig. 3A) always starts up showing some first number (e.g., eight) available applications. Each application has a separate icon and optional number, the latter allowing the user to use a short cut to select a particular application.

Application selection is accomplished using the navigation device 23, which moves the highlighting, and then pressing the navigation device 23, thereby closing the switch 23a.

The Application list can be ordered alphabetically, using defaults, or in a user-defined manner. The user can also define application groups, delete applications, or add new applications via the Options on the Left soft-key in the Application Selection window.

### Call Handling

The user can enter a phone number in several different ways in order to initiate a call. The basic techniques include entering a series of digits manually (in the Idle State), recalling a name and related number from the memory 24, and recalling the last dialled number by pressing the Send-key in the Idle State when the display is otherwise empty. Other, more advanced techniques to enter a phone number include, but are not limited to, cutting a number (i.e., a character string such as 0123456) from a text message, responding to a page, using an in-call number transfer over the air, or control from an external PC that is coupled to the mobile station 10 though a wired or a wireless (e.g., IR) link.

Once the telephone number to be called is available, pressing the SEND-key initiates a call to the displayed phone number, or to the number associated with a name on the display 20. Once the SEND-key has been pressed to initiate a call the following events occur.

First, the In-Call indicator displays in the Status bar. Second, the text CALLING displays with the phone number that has been dialled in the Call Setup window. The In-Call window is displayed to the user. If the call was created based on the name on display, the number associated with the name appears on the display. After a short period of time the phone number is replaced with the associated name (if found in the memory 24). During the call setup a Call Setup animation may display in addition to the Calling display text in the Outgoing Call window.

An incoming call is indicated to the user by playing a ringing tone and displaying the text CALL in the Incoming Call window. This occurs until the incoming call is answered or is rejected, or deflected as in GSM (e.g., call transfer to voice mail or a second number). In addition to these indications, there may also be other indications depending on the availability of the Calling Line Identification (CLI) feature. If CLI is available then the telephone number of the calling party may be displayed, and/or the calling party's name if a name is found in the memory 24 in association with the CLI number.

If the user is in an Application when an incoming call is received, the current operation is suspended until the call is answered, rejected, or the mobile station stops ringing.

The controller 18 saves the state of the active Application, and then subsequently restores the mobile station 10 to the same point or state after the incoming call is terminated.

### Terminating Calls

An active call is terminated by pressing END-key while in the In-Call state. After the END-key has been pressed to terminate the call the In-Call indicator is removed from Status window. If the call being terminated was an Incoming call, as described above, then the controller 18 restores the mobile station 10 to the state it was in before the call was answered.

In the case of an Outgoing call, or if the user has performed any operation (e.g. used the menu or entered digit(s)) during an Active call) the state of the phone is not changed. If the Outgoing call was created using a feature then the phone returns to the feature activation screen.

For a single Active call, if the network disconnects the call, or the call is disconnected due to a loss of signal, the mobile station 10 returns to the state it was in before the call was connected, without the user having to press Call termination. When the remote party terminates the call the mobile station 10 knows the changed state automatically and reflects the new call situation. If there are no further Active or Held calls the controller 18 returns the mobile station 10 to the Idle state, if the user was in the In-call menu.

A number of operations using the memory 24 are now described in the context of a Phoneboook Application.

The Phonebook contains the following information groups:

(A) Contact data, including name, phone number (home, office, and GSM as default), E-mail address, and postal address; (B) Business Card, including company name, person's name, title, company address, phone number, and E-mail address; (C) Personal information, including picture or image (e.g., a bitmap downloaded from a digital camera or from a PC), notes, and birthday; and (D) Contact log (automatically generated by the controller 18), including voice calls, messages, and appointments.

The Phonebook is activated by using the navigation device 23 while in the Idle State, or by using the Applications-key. Once the user has activated the Phonebook a Name View (also referred to as the Name List) displays showing the saved names in the memory 24 in alphabetical order. The navigation device 23 can then be used to scroll through the list of names and to select a name. The numeric keypad keys can also be placed into the alpha mode to enter a search string, wherein for each newly entered character a list of matching entries are displayed to the user.

During the use of Phonebook the Left soft-key contains the following options: (A) selection of various views (alphabetical, ordered by company name, according to second name, etc.); (B) short-cut to manual dialing (note that manual dialing is not possible by simply pressing a numeric key in the names list, as the numeric keys are used for entering in the search string); (C) View Details (same as pressing navigation device 23); (D) add a new entry; (E) erase a name entry; (F) Edit an entry; (G) Copy, Paste, which is a general option in all situations where data are being viewed; (H) send a SMS message to a number in the highlighted name entry; (I) send an E-mail message to a number in the highlighted name entry; (J) send the highlighted name entry to another person (using Business Card or other format via SMS or E-mail); and (K) application settings, such as font size and default view mode.

A Detailed Memory View function allows the user to view all information that is stored for the memory entry. The Detailed Memory View is obtained from the Name View by pressing the navigation device 23, or via the context sensitive options on the Left soft-key (Details View).

The Options associated with the Detailed Memory Screen include options directly related to the highlighted data item, more general options for the Detailed Memory View, and finally the general options that are always available.

More specifically, the options of the Detailed Memory Screen are: (A) Set view (Contact info, Personal info, Business card, Contact log); (B) Erase, which in turn may display a dialogue (sub-options) allowing the user to Erase a selected field, Erase all information in the Detailed Memory View mode, or Erase the complete Contact/Name entry; (C) Assign to Speed Dial; (D) Copy/Paste (this is a general option); (E) Copy to SIM (if available in the mobile station 10); (F) Settings, that is the Start-up view for this name (or all) Detailed Memory Views, etc.; (G) Distribution lists short-cut; and (H) Grouping, enabling names to be selectively linked or grouped together.

For all view options of the Detailed Memory View (Contact info, Personal info, Business card), there exists a corresponding Edit mode. The Edit mode is accessible via the Edit and Add Info options on the Left soft-key in the Detailed Memory View application. The Edit mode appears similar to the Detailed Memory View, but contains not only all stored data (these can be edited here), but also some amount of empty slots for entering phone numbers, addresses etc. The user can set the predefined fields using Phonebook settings.

The input and output handling in Edit mode is basically the same as in the Detailed Memory View (thus providing a familiar display layout and user interface 11 feel). When entering the Edit mode, the user can move among all data fields, using the navigation device 23.

The following table describes the functionality of the keys in the Edit Mode.

| Key | Functionality |
|---|---|
| Numeric Keys | Numeric keys are used to enter |
| | either digits or characters |
| | (depending on the selected type |
| | of field.) |
| Clear-Key | Deletes characters and digits in |
| | a backspace manner from the |
| | cursor 20a. |
| End-Key | If the user presses the End key |
| | while in the Edit mode the user |
| | is queried whether the user wants |
| | to save the changes. The mobile |
| | station 10 then returns to the |
| | Idle State. |
| Right Soft-Key: Back | If the user presses the Back- |
| | softkey the user is queried |
| | whether the user wants to save |
| | the changes (if changes were made |
| | by the user). The mobile station |
| | 10 then returns to the Detailed |
| | Memory View. |
| Left Soft Key: Options | Applicable Options are displayed. |

### Messaging Application

A number of different types of messages are handled using the Messaging application. Message handling is initiated via the Application Selection Window (see Figs. 3A and 3B) .

A Messages Application Idle state displays a number of folders: Inbox, Sent messages, Archive, and Templates. The Inbox folder contains all received messages, but not saved messages. The messages (both E-mails and SMS) are listed according to received time (last in-first out). If no name match can be found for an SMS sender, the title of the message is used instead. The navigation device 23 is used to scroll though the messages and to select a specific one of the messages. The Right soft-key is used for backstepping.

The following exemplary Options are available: (A) Erase (the currently highlighted message) ; (B) Move (further sub-options: to archive, folder or other); (C) Copy (further sub-options: to archive, folder or other); (D) View/Read (the currently highlighted message); (E) Erase all Old Messages (where the definition of Old may be user defined) ; (F) Send My Business Card; (G) Settings: Message Center Number, etc.); (H) Reply to mail: such as (a) include original in reply, (b) blank message, (c) use template as basis for reply, (d) select among one or more standard answers (Yes, No, I will Reply later, etc.); and (I) Forward mail.

### Message View Application

The Message View allows the user to view one entire SMS-message on the display screen 20. This mode is accessed from the Inbox message list by selecting a specific message.

The functionality of the input interface in the Message View Application are described in the following table.

| Key | Functionality |
|---|---|
| Right/Left keys | View Previous/Next message. |
| Up/Down keys | Scroll up and down in the message. If |
| | the message can be contained in one |
| | single display screen, the up/down |
| | keys have no function. |
| Send key | Offer a selection list of telephone |
| | number(s) that have been cut out of |
| | the highlighted message, enabling a |
| | call to be placed to the cut-out |
| | number. |
| Right Soft-key | Backstep. |

The Left Soft-Key presents several Options, such as Reply to Mail (as described above), Forward mail, Save Message, Edit Message, Call Back the originator of the message, Cut Number(s), Store contents of message as Business Card, and Compose New Message.

### Calendar Application

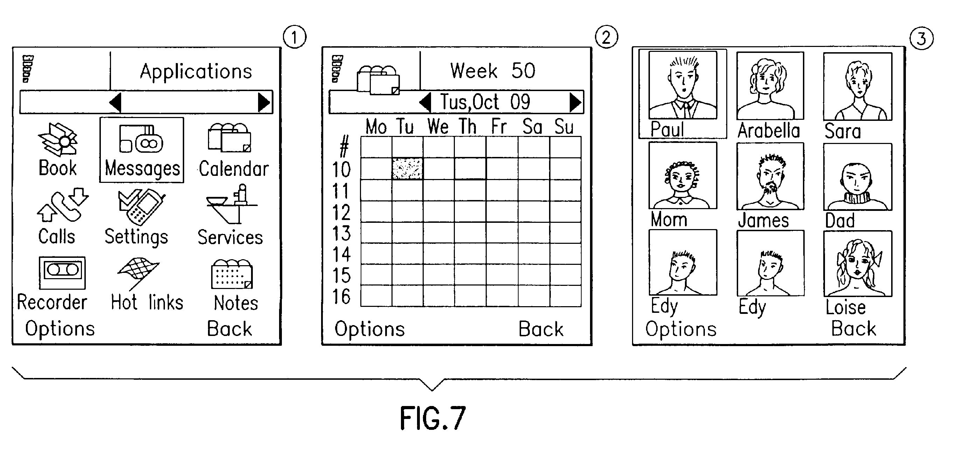

Calendar events are handled using the Calendar application, which is accessed via the Application Selection Window (see Figs. 3A, 3B, and the central screen of Fig. 7). The user may set the default view of the Calendar application Idle State. The selectable views are a month view, a week view, and a day view. The default view displays when the user accesses the application using the Application Selection Window. The user may change the view using an Option.

As examples of the utility of the use of this invention, reference is now made to Fig. 4 for showing an exemplary progression of operations. The arrows between the display screens depict the logical flow of operation. In a first screen the mobile station 10 is in the Phone Idle state. The user then depresses the Applications soft-key to bring up the Applications screen. A default application (Phonebook) is highlighted. The user then manipulates the navigation device 23 to highlight the Messages application (screen 3). By depressing the navigation device 23 the Messages application is selected thereby bringing up the Messages applications screen (screen 4). The Inbox function is shown highlighted as a default application when entering the Inbox application.

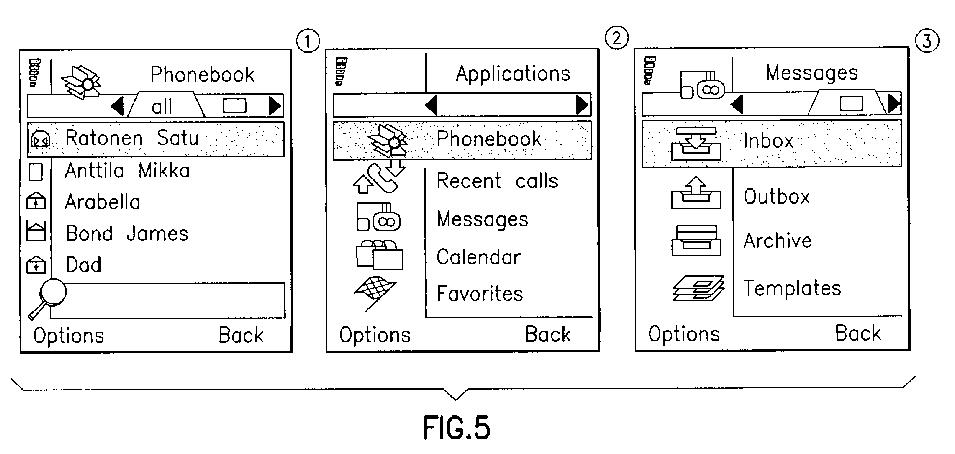

Fig. 5 illustrates various Application screens showing lists of data objects (screen 1), and Applications (screens 2 and 3).

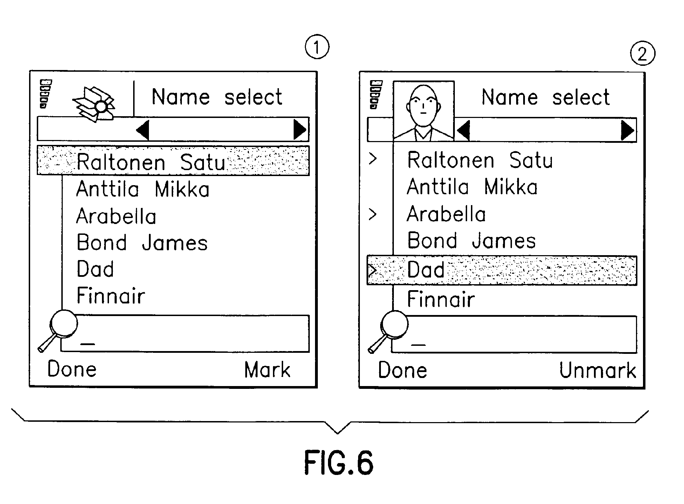

Fig. 6 is an example of a multi-selection list. In screen 1 no data objects (names) have been selected. Screen 2 shows the result after three data objects have been selected using either the Mark soft-key of screen 1 or the navigation device 23. The first, third and fifth data objects are shown as being selected (by the > character, although underlining could be used as well). Furthermore, the fifth data object is shown as currently being highlighted and an associated bitmapped image has been accessed from the memory 24 and displayed.

Fig. 7 shows three different examples of a selection grid that is presented to a user. Note that the third screen displays bitmapped images associated with the Name data objects. If no bitmapped image exists for a certain name then a default, user-selected image could be used, or the image can be simply left blank.

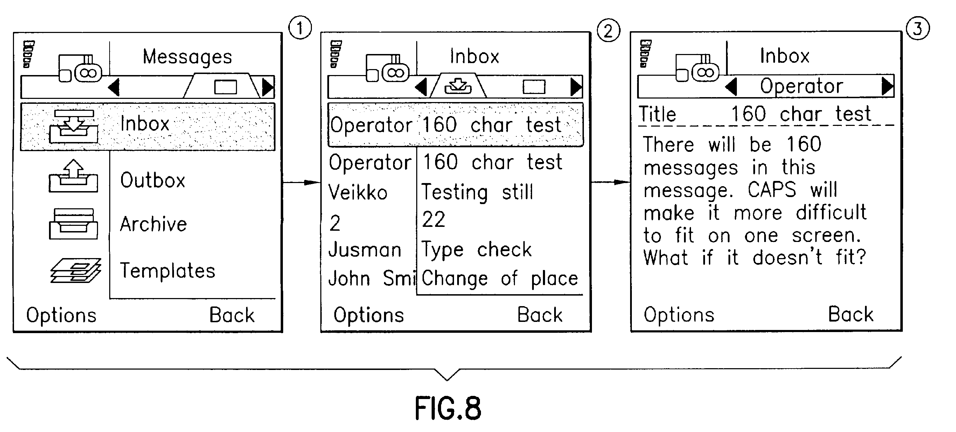

Fig. 8 is an example of the use of this invention in zooming and scrolling data. In screen 1 the user is assumed to have selected the Inbox Message application. This transitions the display to screen 2 where a list of received messages is displayed to the user. The list is displayed so as to provide the name of the originator of the message (e.g., "system operator"), and the title of the message (e.g., "160 character test"). By highlighting and selecting the first message using the navigation device 23, the mobile station 10 then displays the third screen where the text of the selected received message is displayed to the user.

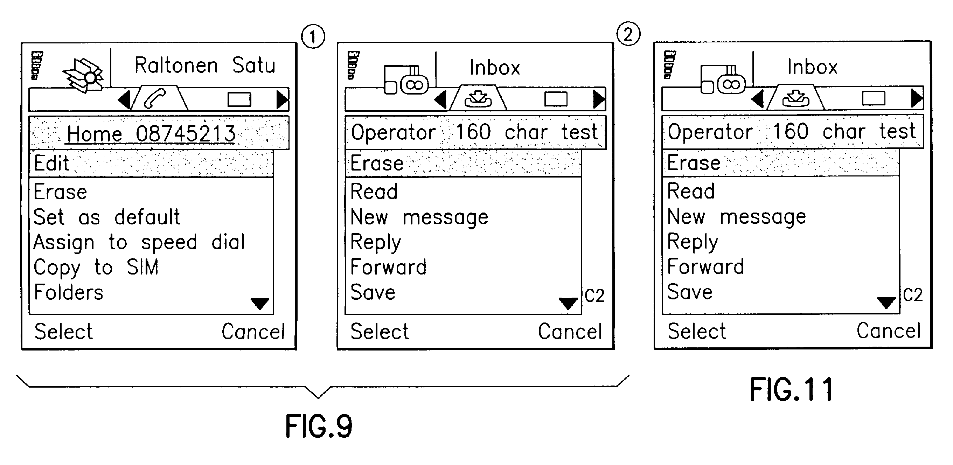

Figs. 9 and 10 illustrate examples of the use of data as an object and the manipulation of data objects. Fig. 9 specifically shows context sensitive options, such as when the Phonebook application is selected (screen 1) and where the Inbox application is selected (screen 2). Note that the list of available options is specific to the selected application. In Fig. 10 the fast editing of a field is illustrated. Depressing the navigation device 23 in the elementary level of a Form will either edit the field or display field sensitive options. In Fig. 10 there is shown an example of displaying the field sensitive options. For example, in screen 1 contact information in the Phonebook application is displayed. By depressing the Options soft-key the second screen is displayed, where the user is provided with a pop-up menu listing available options. For example, the user can call the highlighted number, or edit the number, or erase the number, or set the number as a default number, or assign the highlighted number to the speed dial memory. It is assumed for this example that the user has manipulated the navigation device 23 to select the third Option, thereby highlighting the Erase option in screen 3. By then depressing the navigation device 23, and closing the switch 23a, the highlighted number will be erased from the Phonebook portion of the memory 24 by the controller 18.

Figs. 12 and 13 represent exemplary shortcuts to stored data. By example, Fig. 12 shows an exemplary addition of a Bookmark to a favorites list (which may be referred to as a Pinboard). In screen 1 the user has highlighted and selected a telephone number. By pressing the Options soft-key the Options pop-up menu is displayed (screen 2). The user then scrolls to an Option "Create Bookmark" which is listed under the General options (the second pop-up window) . The user is then prompted for a Name for the Bookmark (e.g., the user could enter "home phone") which is then saved in the favorites list. A successful save operation is indicated to the user.

Fig. 13 shows how a Bookmark is recalled from the favorites list. In screen 1 the mobile station 10 is considered to be in the Phone Idle state, and the user has depressed the Pinboard (favorites) soft-key. The screen 2 (the Pinboard) is then displayed to the user. The Pinboard contains the Names of previously saved Bookmarks, such as an airline timetable and a portion of the Calendar that was previously moved to the Pinboard. Each Bookmark item in the Pinboard is selectable and may have an index number. The user can either scroll to the desired Bookmark or simply enter the index number. By example, entering a "3" the controller 18 would access and display the previously stored airline timetable, using a link that was associated with the Name when the Bookmark was saved to the Pinboard.

In general, a Bookmarked item could be an Application, a level within an Application, a data object (such as a name), or some action (e.g., call home). A Bookmark may also provide a link to an external application or data. By example, a particular Bookmark may be a link (URL) to a World Wide Web (WWW) server that, when selected, causes a wireless connection to be made, via the RF transceiver of Fig. 1, to the WWW server through the Internet.

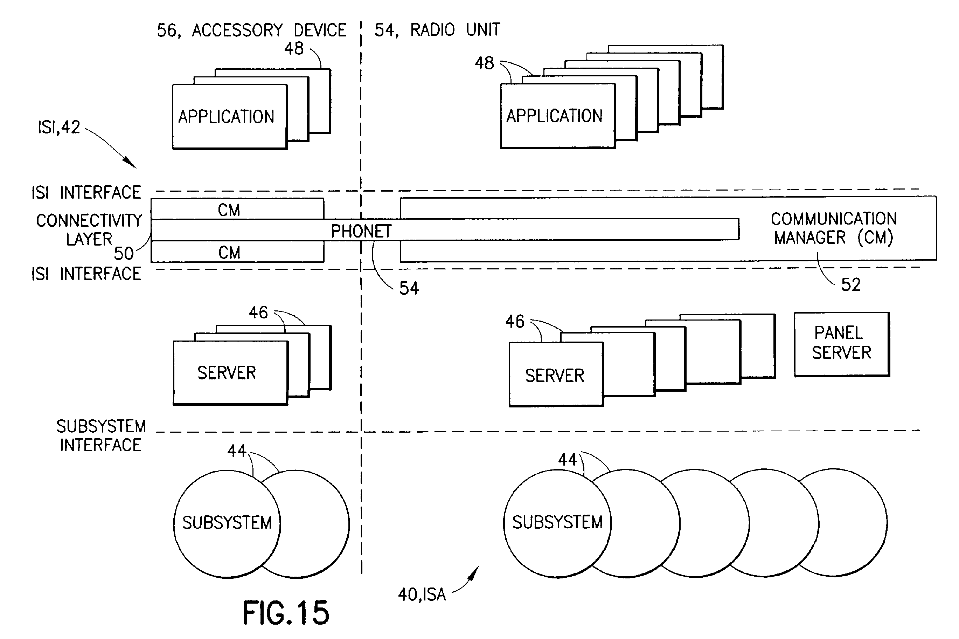

Fig. 15 is a high level diagram of an Intelligent Service Architecture (ISA) 40 within which this invention resides. General reference in this regard can be had to the above-noted copending U.S. Patent Application No.: 08/965,670, filed 11/07/97, entitled "Intelligent Service Interface and Messaging Protocol for Coupling a Mobile Station to Peripheral Devices", by Mia Heinonen, Aimo Alaniemi and Andrew Turner, the disclosure of which is incorporated by reference herein in its entirety.

The ISA 40 includes the Intelligent Service Interface (ISI) 42, and divides the fundamental capabilities of the mobile station 10 into logical groups of subsystems or resources 44, which are each controlled by an associated server 46. The server 46 provides an interface which allows any number of applications 48 to use a particular resource 44. The applications 48 link together the resources of the mobile station 10 with logic to produce the features of the mobile station, and they can use any number of resources 44, via their respective servers 46, to the build the features. Applications 48 make resource requests to the servers 46 through a connectivity layer 50, and the servers 46 send response messages back to the applications 48 also through the connectivity layer 50. The connectivity layer 50 functions to decouple the applications 48 from the specifics of the underlying servers 46 and their resources 44. The connectivity layer 50 includes one or more communications managers (CMs) 52 and a protocol software module referred to as a Phone and Network, Peripheral Host-Object Network (PHONET) 54. As is made apparent, applications 48 using the resources 44 can exist within the mobile station 10, or more generally the radio unit 56, or they may be located externally in an accessory device 56 or a computer. The accessory device 56 can include its own servers 46 and associated subsystems and resources 44, which are accessible to the applications 48 in the radio unit 54, vis the connectivity layer 50.

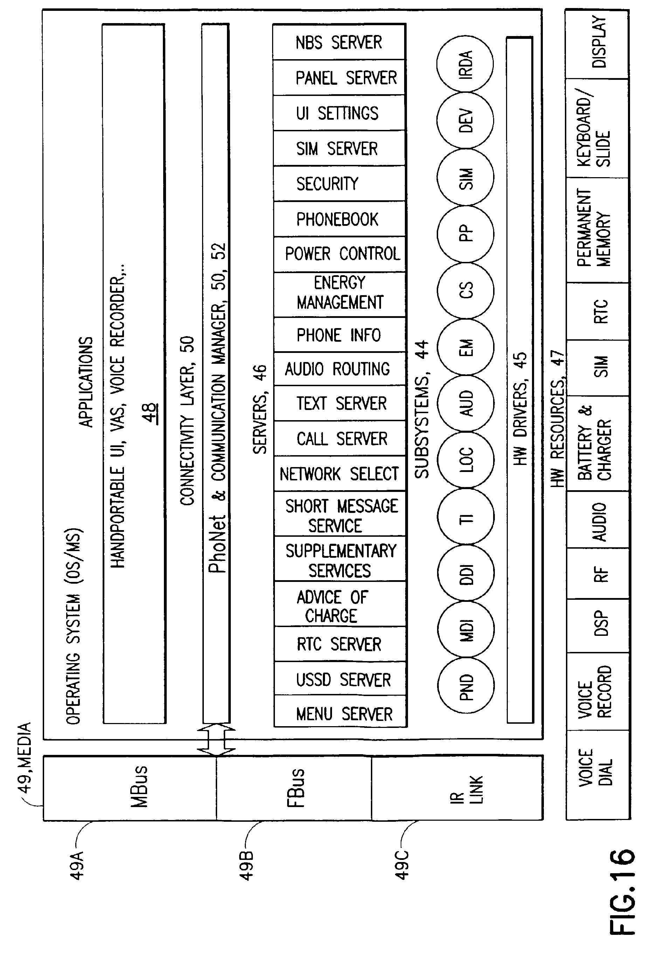

Fig. 16 shows ISA 40 in greater detail, and also depicts various exemplary applications 40, servers 46 and their underlying subsystems or resources 44, as well as the hardware drivers 45 and the underlying corresponding hardware resources 47. Access to external devices is made via media 49, which includes various buses (MBus 49A and FBus 49B), as well as, for example, an IR link 49C.

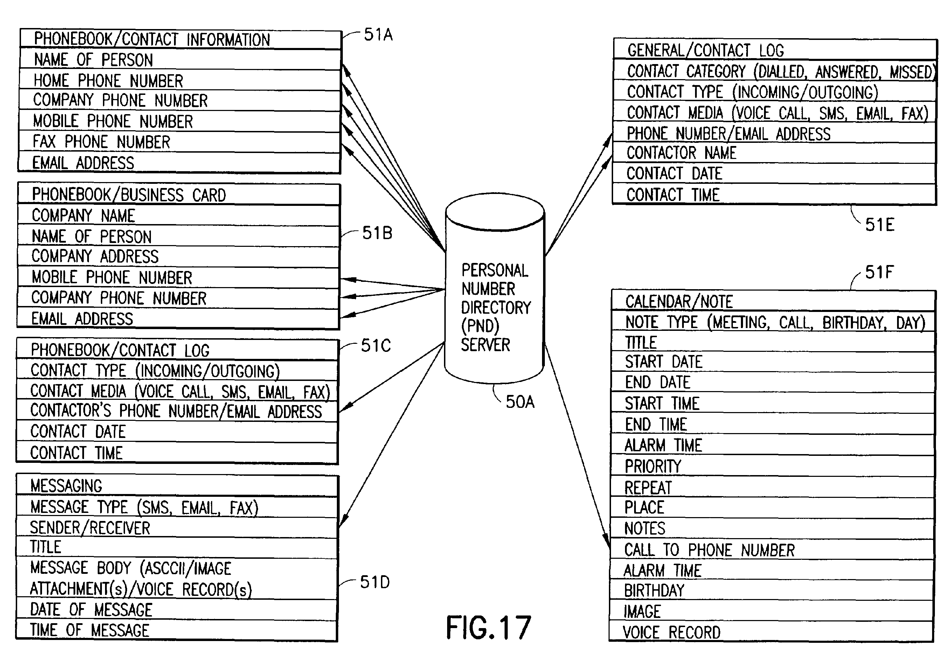

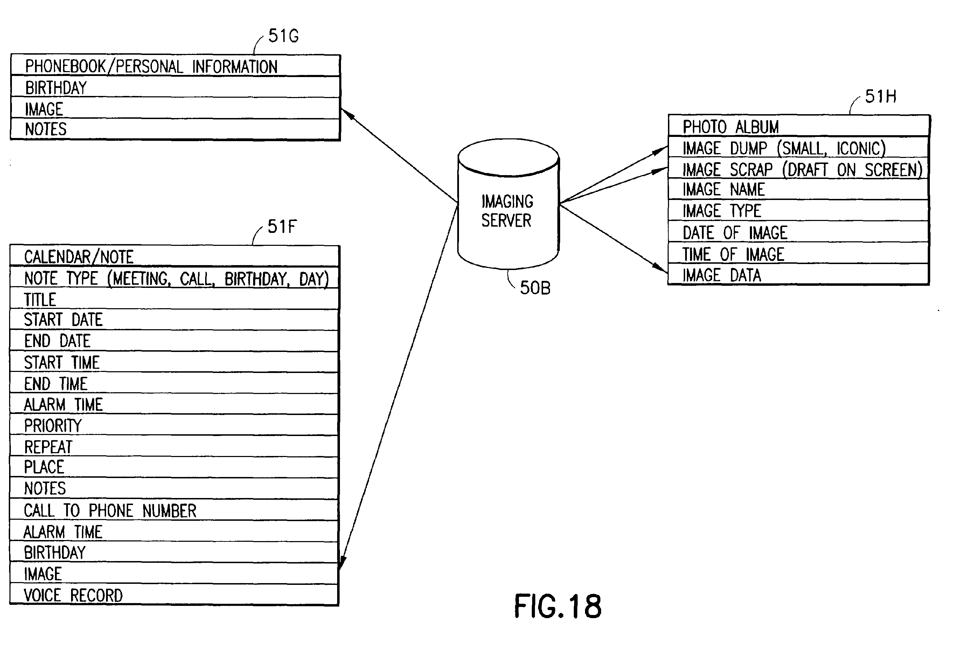

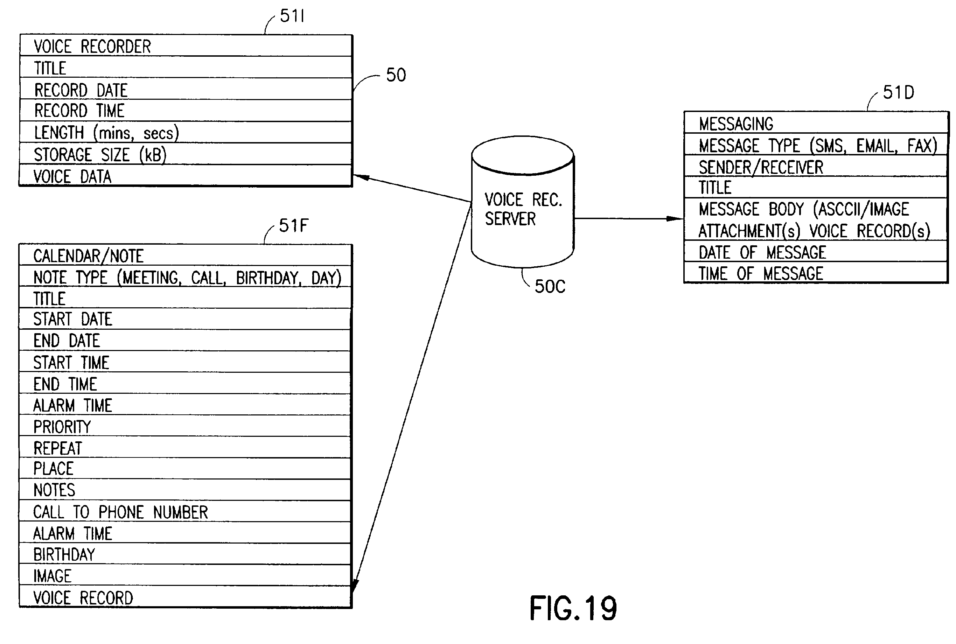

As applied to the teachings of this invention, and referring to Figs. 17, 18 and 19, the use of the servers 46 is described in further detail. More particularly, Fig. 17 depicts a relationship between a Personal Number Directory (PND) server 50A and various database entries made in a Phonebook/Contact Information Database 51A, a Phonebook/Business Card database 51B, a Phonebook/Contact Log 51C, a Messaging function 51D, a General Contact Log 51E and a Calendar/Notes database 51F. Fig. 18 depicts a relationship between an Imaging server 50B and various database entries, in this case made also in the Calendar/Note database 51F, as well as in a Phonebook/Personal Information database 51G and a Photo Album database 51H. Note that the Imaging server 50B employs the Image field(s) of the Calendar/Note database 51F, while the PND server 50A of Fig. 17 employs the Call to Phone Number field(s) of the same Calendar/Note database 51F. Fig. 19 depicts a relationship between a Voice Recorder server 50C and various database entries, including a Voice Recorder database 51I, as well as the previously mentioned Messaging function 51D and the Calendar/Note database 51F.

In accordance with an aspect of this invention this technique enables a multi-media user interface 11 to be established and operated. For example, the Voice Recorder server 50C enables a user to record an audio note, and then paste the recorded Voice data from the Voice Recorder database 51I as an audio note to the calendar via the Voice record entry of the Calendar/Notes database 51F.

The use of this technique further enables existing applications to be revised or deleted, and new applications installed, without disturbing the underlying databases. This is made possible since the access to the underlying resources, including databases, is made through their associated servers 50, via the ISI connectivity layer 52.

Based on the foregoing description it can be realized that the inventors have provided a novel user interface 11 for a mobile station. A number of valuable features are provided, such as an ability to cut and paste. For example, a portion of an E-mail or SMS message can be cut and then pasted to a Calendar entry, or a character string representing a phone number can be cut from an E-mail or SMS message and then pasted as a numeric string to a phone number-containing data structure, such as a speed dial memory or a call barring memory (e.g., preventing the mobile station from calling the pasted telephone number).

Furthermore, the displayed Options list is made both Application sensitive as well as data object sensitive, thereby improving the human factors of the user interface 11. A hierarchy of Options can also be provided, wherein a particular Option may have one or more sub-options, individual ones of which may have lower level options as well.

In addition, individual data objects are provided, such as a name, a phone number, an address, etc., and the individual data objects can then be grouped into a larger data object, such as an entry in the Phonebook. A hierarchy of data objects can thus be defined and manipulated at various levels.

The use of a removable memory, such as a SIM, can be used to backup and transfer the data objects from one mobile station to another.

The mobile station 10 may further include the above-mentioned voice recorder to reduce an amount of manual entry. As was noted above, a recorded voice entry (which is digitized and stored in the memory 24) could be linked to one or more Calendar entries (dates). In this manner selecting a particular Calendar entry causes a pre-recorded voice data object to be accessed and played back to the user through the speaker 17 of Fig. 1.

All of these valuable features are implemented by the data processor that forms a portion of the controller 18, under the direction of a stored program in the memory 24, and in cooperation with various tables, data structures, bitmapped images, and forward and backward links between same that are also stored in the memory 24.

By example, consider an exemplary case where a user wishes to provide an image of persons that the user will meet with in the Calendar application. Assume that in a given month the user will meet with the same person on three different days. In this case it is not necessary to store three separate images of the same person in the memory 24. Instead, one image is stored in an images database with a name identifier, and a link is provided from each of the three separate day entries of the Calendar to the same bitmapped image. In this manner, when the user highlights one of the selected days that contains the name of the person, and the name is indicated as having an associated image, the link is followed to the images database, the image is retrieved (and decompressed if stored in compressed form), and the bitmapped image of the person is displayed to the user.

Thus, while the invention has been particularly shown and described with respect to preferred embodiments thereof, it will be understood by those skilled in the art that changes in form and details may be made therein without departing from the scope and spirit of the invention.

## Claims

1. A method of operating a mobile station, comprising steps of:
providing the mobile station with a user interface comprised of a display and at least one user input device;
displaying to the user on the display an identification of individual ones of a plurality of Applications that the mobile station is capable of executing, the identifications being simultaneously displayed;
manipulating the input device to select one of the displayed Application indications; and
in response to further input from the user, displaying a list of Options that are available for the selected Application.

2. A method as in claim 1, wherein at least some of the displayed Options are logically grouped together in Option categories.

3. A method as in claim 2, wherein the categories are comprised of context specific Options.

4. A method as in claim 2, wherein the categories are comprised of state specific Options.

5. A method as in claim 2, wherein the categories are comprised of Application specific options.

6. A method as in claim 2, wherein the categories are comprised of general Options.

7. A method as in claim 1, wherein the displayed identification of Applications are a subset of a set of Applications, and are those that are user selected from the set of Applications.

8. A method as in claim 1, wherein the identifications are displayed in a two dimensional grid format.

9. A method as in claim 1, wherein the identifications are displayed in a list format.

10. A method as in claim 1, wherein the step of displaying includes a step of visually distinguishing one of the displayed identifications from the other displayed identifications, the visually distinguished identification identifying a default Application.

11. A method as in claim 1, wherein the step of displaying includes a step of grouping the displayed identifications into user-specified Application groups.

12. A method as in claim 1, wherein the mobile station stores data related to a first Application, and further comprising steps of:
manipulating the input device to designate all or a portion of the stored data; and
further manipulating the input device to associate the designated data with at least one other, different Application.

13. A method as in claim 12, wherein the stored data is comprised of a message that was received from a wireless network, wherein the designated data is comprised of a character string that represents a telephone number, and wherein the at least one other different Application is an Application that uses a numeric telephone number.

14. A method as in claim 1, wherein the mobile station stores data related to an Application, the stored data comprising image data.

15. A method as in claim 1, wherein the mobile station stores data related to an Application, the stored data comprising digitized speech.

16. A method as in claim 1, wherein the mobile station stores data related to a multimedia Application, the stored data comprising text data and at least one of image data or recorded voice data.

17. A method as in claim 1, wherein the mobile station stores data related to an Application, and further comprising steps of:
manipulating the input device to designate all or a portion of the stored data; and
further manipulating the input device to associate the designated data with the same or at least one other, different Application.

18. A method as in claim 1, wherein the list of Options is displayed as a pop-up menu that at least partly overlies a display of the selected Application.

19. A method as in claim 1, wherein one of the Options is an Option that when selected by the user enables the user to manipulate the input device to designate a portion of data associated with a location within the selected Application, and to move the designated data portion to another location within the selected Application.

20. A method as in claim 1, wherein one of the Options is an Option that when selected by the user enables the user to manipulate the input device to designate a portion of data associated with a location within the selected Application, and to copy the designated data portion to another location within the selected Application.

21. A method as in claim 1, wherein one of the Options is an Option that when selected by the user enables the user to manipulate the input device to designate a portion of data associated with a location within the selected Application, and to move the designated data portion to a location within another Application.

22. A method as in claim 1, wherein one of the Options is an Option that when selected by the user enables the user to manipulate the input device to designate a portion of data associated with a location within the selected Application, and to copy the designated data portion to a location within another Application.

23. A method as in claim 1, wherein one of the Options is an Option that when selected by the user enables the user to manipulate the input device to designate all or a portion of data associated with a location within a selected Application, to associate an identifier with the designated data portion, and to store the identifier within another selected Application that stores the identifiers of designated data portions.

24. A method as in claim 23, and further comprising steps of:
manipulating the input device to select the another Application;
displaying the stored identifiers;
manipulating the input device to select one of the displayed identifiers; and
displaying the data associated with the selected identifier.

25. A method as in claim 1, and further comprising steps of:
for a certain selected Application, displaying one or more previously stored identifiers;
manipulating the input device to select one of the displayed identifiers; and
displaying data associated with the selected identifier.

26. A method as in claim 25, wherein the identifier includes link information to a data processing system reachable through a data communications network.

27. A mobile station, comprising:
a user interface comprised of a display, a text entry device, and a navigation device for navigating through the display, said navigation device being operable with one hand; and
a controller for displaying to the user on the display an identification of individual ones of a plurality of Applications that the mobile station is capable of executing, the identifications being simultaneously displayed, said controller being responsive to a user manipulating said navigation device for selecting one of the displayed Application indications and for displaying a list of Options that are available for the selected Application.
